# EUROPEAN PATENT APPLICATION

(11) **EP 4 462 300 A1**
(43) Date of publication of application: **13.11.2024**
(21) Application number: 24174449.9
(22) Date of filing: 07.05.2024
(51) Int. Cl.: G06F 30/23, G06F 30/15, G06F 30/13

(54) **METHODS FOR ANALYSIS OF FASTENED STRUCTURES AND SYSTEMS ASSOCIATED THEREWITH**

(30) Priority: 10.05.2023 US 202318315082
(71) Applicant: The Boeing Company, Arlington, VA 22202 (US)
(72) Inventor: LILLEY, Bryan W., ARLINGTON, 22202 (US); SCHAEFER, Joseph D., ARLINGTON, 22202 (US)
(74) Representative: Plasseraud IP

(57) **Abstract**

A method for analysis of a fastened structure includes accessing an electronic design model of the fastened structure, embedding at least one sensor element model within the electronic design model, applying at least one simulated load to the electronic design model, monitoring the measurement parameters using the at least one sensor element model to detect load conditions at the corresponding select location based on the at least one simulated load; and comparing the detected load conditions to predetermined measurement thresholds for the monitored measurement parameters. A fastened structure management system includes a computing system and a storage device in operative communication with the computing system. An analytical computing system for analysis of a fastened structure includes at least one processor and associated memory, at least one electronic storage device and a network interface.

## Description

### FIELD

The present disclosure relates generally to analysis of fastened structures and, particularly, to analysis of electronic design models using simulated loads and embedded sensor models to measure load conditions in conjunction with physical testing and/or validating the design. The analysis can be applied to all levels of design, test and certification product building blocks and all aspects of a product lifecycle. Thus, the analysis can be iterated at lower-level assemblies, higher level assemblies and finally at the product end item. The analysis has applications relating to aircraft design as well as other types of vehicles and transportation structures. Applications in design of various other types of fastened structures are also contemplated.

### BACKGROUND

Design of fastened structures, such as aircraft, face multiple challenges associated with determining local loads and load distributions. For example, various performance characteristics (e.g., displacements, rotations, stiffnesses, clamp-up, damage states) within fastened assemblies undergoing thermo-mechanical testing face numerous difficulties. Performance characteristics are typically evaluated via physical testing in closed environmental chambers which inherently obscure/occlude visual and physical measurement of desired behaviors. The primary problem is that it is physically impossible to measure all the necessary attributes accurately and currently during the test at reasonable cost, schedule, and precision.

Accordingly, those skilled in the art continue with research and development efforts to improve techniques for testing the design of fastened structures, particularly development of in-situ techniques to analytically estimate the internal load state of joint components, especially, fasteners at the joint and/or any locations between fasteners.

### SUMMARY

Disclosed are examples of methods for analysis of a fastened structure, fastened structure management systems, analytical computing systems for analysis of a fastened structure. The following is a non-exhaustive list of examples, which may or may not be claimed, of the subject matter according to the present disclosure.

In an example, the disclosed method for analysis of a fastened structure includes: (1) accessing an electronic design model of the fastened structure, the fastened structure including at least two structural elements assembled via a plurality of fastener elements, the electronic design model including structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; (2) embedding at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; (3) applying at least one simulated load to the electronic design model; (4) monitoring the measurement parameters using the at least one sensor element model to detect load conditions at the corresponding select location based on the at least one simulated load; and (5) comparing the detected load conditions to predetermined measurement thresholds for the monitored measurement parameters.

In an example, a fastened structure management system includes a computing system and a storage device in operative communication with the computing system. The computing system configured to run a design analysis application program. In conjunction with running the design analysis application program, the computing system is configured to: (1) access an electronic design model of a fastened structure from a design computing system, the fastened structure including at least two structural elements assembled via a plurality of fastener elements, the electronic design model including structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; (2) embed at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; (3) apply at least one simulated load to the electronic design model; (4) monitor the measurement parameters using the at least one sensor element model to detect load conditions at the corresponding select location based on the at least one simulated load; and (5) compare the detected load conditions to predetermined measurement thresholds for the monitored measurement parameters.

In an example, the disclosed analytical computing system for analysis of a fastened structure includes at least one processor and associated memory, at least one electronic storage device and a network interface. The at least one electronic storage device storing a design analysis application program. The network interface in operative communication with the at least one processor and configured to interface with a communication network. The analytical computing system, in conjunction with the at least one processor running the design analysis application program, is configured to: (1) access an electronic design model of a fastened structure from a design computing system via the network interface and the communication network, the fastened structure including at least two structural elements assembled via a plurality of fastener elements, the electronic design model including structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; (2) embed at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; (3) apply at least one simulated load to the electronic design model; (4) monitor the measurement parameters using the at least one sensor element model to detect load conditions at the corresponding select location based on the at least one simulated load; and (5) compare the detected load conditions to predetermined measurement thresholds for the monitored measurement parameters.

Other examples of the disclosed methods for analysis of a fastened structure, fastened structure management systems, analytical computing systems for analysis of a fastened structure will become apparent from the following detailed description, the accompanying drawings and the appended claims.

### BRIEF DESCRIPTION OF THE DRAWINGS

Fig. 1 is a flow diagram of an example of a method for analysis of a fastened structure;
Fig. 2, in combination with Fig. 1, is a flow diagram of another example of a method for analysis of a fastened structure;
Fig. 3, in combination with Fig. 1, is a flow diagram of yet another example of a method for analysis of a fastened structure;
Fig. 4 is a functional block diagram of an example of an electronic design model;
Fig. 5 is a functional block diagram of an example of a fastened structure;
Fig. 6 is a functional block diagram of an example of a fastened structure management system;
Fig. 7 is a functional block diagram of an example of an analytical computing system for analysis of a fastened structure;
Fig. 8 is a block diagram of aircraft production and service methodology; and
Fig. 9 is a schematic illustration of an aircraft.

### DETAILED DESCRIPTION

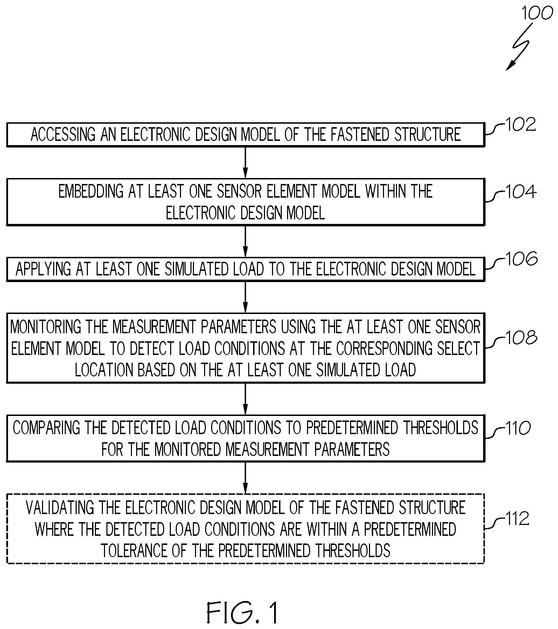

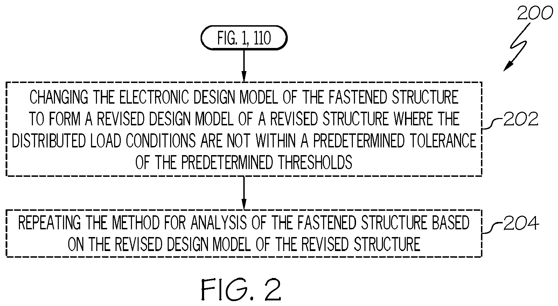

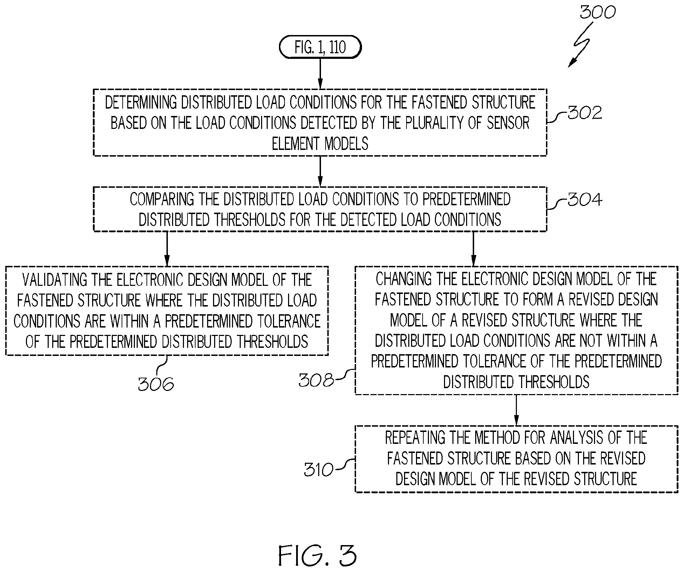

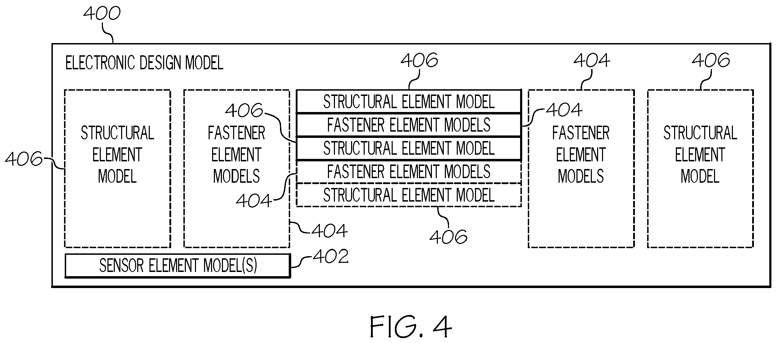

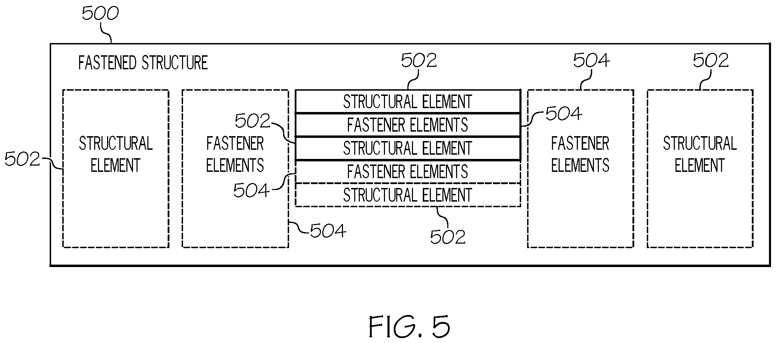

Referring generally to Figs. 1-6, by way of examples, the present disclosure is directed to a method 100, 200, 300 for analysis of a fastened structure 500. Optional features in Figs. 1-3 are depicted as dashed blocks of the flow diagrams. Fig. 2, in combination with Fig. 1, discloses an example of method 200. Fig. 3, in combination with Fig. 1, disclose several examples of method 300. Fig. 4 discloses an example of an electronic design model 400. Fig. 5 discloses an example of a fastened structure 500.

With reference again to Figs. 1 and 4-6, in one or more examples, a method 100 (see Fig. 1) for analysis of a fastened structure 500 begins at 102 where an electronic design model 400 of the fastened structure 500 is accessed. The fastened structure 500 includes at least two structural elements 502 assembled via a plurality of fastener elements 504. The electronic design model 400 includes structural element parameters 610 for each structural element 502 and fastener parameters 612 for each fastener element 504. The structural element parameters 610 and the fastener parameters 612 are representative of characteristics and behaviors of the corresponding structural elements 502 and the corresponding fastener elements 504 in environments to which a built-up version of the fastened structure 500 is expected to be exposed. At 104, at least one sensor element model 402 is embedded within the electronic design model 400. Each sensor element model 402 is embedded at a select location relating to a select joint between two or more structural elements 502 of the at least two structural elements 502. The at least one sensor element model 402 configured to monitor measurement parameters 614 at the select location in response to one or more simulated load 616 applied to the electronic design model 400. At 106, at least one simulated load 616 is applied to the electronic design model 400. At 108, the measurement parameters 614 are monitored using the at least one sensor element model 402 to detect load conditions 618 at the corresponding select location based on the at least one simulated load 616. At 110, the detected load conditions 618 are compared to predetermined measurement thresholds 620 for the monitored measurement parameters 614.

In another example of the method 100, the fastened structure 500 includes three or more structural elements 502 assembled via the plurality of fastener elements 504. In yet another example of the method 100, the fastened structure 500 forms a product structure, a vehicle structure, an automotive vehicle structure, an air vehicle structure, an aircraft structure, a missile structure, a rocket structure, a launch structure, a satellite structure, a bridge structure, a tunnel structure or any other suitable structure with multiple parts that are fastened together.

In still another example of the method 100, the plurality of fastener elements 504 include a set of fastener elements 504. In this example, the at least two structural elements 502 include at least one composite structural element and at least one non-composite structural element. The at least one non-composite structural element is joined to one or more of the at least one composite structural element via the set of fastener elements 504. In a further example, the plurality of fastener elements 504 and the set of fastener elements 504 include metal fasteners, metal screws, metal machine screws, metal bolts, metal pins, metal rivets, metal nuts, metal retaining mechanisms or any other suitable fastener part in any suitable combination. In another further example, the at least one composite structural element includes a thermoplastic composite, a thermoset composite, a reinforced composite, a fiber reinforced composite, a carbon fiber reinforced composite, a reinforced polymer, a fiber reinforced polymer, a carbon fiber reinforced polymer or any other suitable composite material in any suitable combination. In yet another further example, the at least one non-composite structural element includes titanium, a titanium-based metal, a titanium alloy, Ti-6Al-4V, Ti 6-4, aluminum, an aluminum-based metal, an aluminum alloy, vanadium, a vanadium-based metal, a vanadium alloy, paper, foam, resin, metal, an additive or any other suitable non-composite solid material in any suitable combination.

In still yet another example of the method 100, the plurality of fastener elements 504 are represented in the electronic design model 400 as a plurality of fastener element models 404. In other words, the fastener element models are modeled structural elements that are represented in software, such as ABAQUS° or LS-DYNA. ABAQUS° is a registered trademark of Dassault Systemes Simulia Corporation of Johnston, Rhode Island. LS-DYNA is commercially available from Ansys, Inc. of Canonsburg, Pennsylvania. In a further example, each fastener element model 404 is represented in the electronic design model 400 as a truss element, a beam element, a shell element or any other suitable finite element in any suitable combination.

In another example of the method 100, the at least two structural elements 502 are represented in the electronic design model 400 as at least two structural element models 406. In other words, the structural element models are modeled structural elements that are represented in software, such as ABAQUS° or LS-DYNA. In a further example, each structural element model 406 is represented in the electronic design model 400 as a beam element, a shell element, a solid element or any other suitable finite element in any suitable combination. For example, the electronic design model 400 can be viewed as a mesh of structural element models 406.

In yet another example of the method 100, each sensor element model 402 is represented in the electronic design model 400 as a truss element, a beam element, a shell element or any other suitable finite element in any suitable combination. In other words, the sensor element models are modeled structural elements that are represented in software, such as ABAQUS^{®} or LS-DYNA.

In still another example of the method 100, the select location includes a select surface location of the at least two structural elements 502, a select interior location of the at least two structural elements 502, a select gap location between the at least two structural elements 502, a select overlap location for two or more structural elements 502 of the at least two structural elements 502 or any other suitable location associated with the at least two structural elements 502.

In still yet another example of the method 100, the at least one simulated load 616 includes a simulated thermal load, a simulated hygric load, a simulated mechanical load, a simulated structural load, a simulated axial load or any other suitable simulated load in any suitable combination. The simulated loads may be applied as a constant, in a cyclic manner, as a static load, as an ambient load, with a high rate of change, dynamically, as an impact load, in a wave manner or in any other suitable application technique.

In another example of the method 100, the detected load conditions 618 include a displacement condition, a rotation condition, a stiffness condition, a clamp-up condition, a deformation condition, a damage state condition or any other suitable detected load condition in any suitable combination. Many of the detected load conditions 618 are due to the fastened structure including different types of structural elements with different thermal expansion characteristics. For example, the fastened structure may include various types of composite structural elements (e.g., thermoplastic composites) and non-composite structural elements (e.g., titanium).

In yet another example of the method 100, the at least one sensor element model 402 includes a zero-stiffness model that has no effect on the detected load conditions 618. In still another example of the method 100, the at least one sensor element model 402 includes a one-dimensional element model, a two-dimensional element model or any other suitable finite element model in any suitable combination. In still yet another example of the method 100, the at least one sensor element model 402 is representative of a strain measurement device, an extensometer, a strain gauge, a strain transducer, a load sensor, a load cell, a force sensor, a piezoresistive force sensor, a torque sensor, a torque transducer, a torque cell, a stiffness sensor, a tactile sensor or any other suitable sensor in any suitable combination.

In another example of the method 100, the at least one sensor element model 402 includes at least one fastener element model 404 associated with at least one fastener element 504 of the plurality of fastener elements 504. In a further example, the fastener element model 404 includes a one-dimensional element model or any other suitable finite element model in any suitable combination. In another further example, the fastener element model 404 includes a calibrated model with fastener parameters 612 representative of characteristics and behaviors of an actual fastener in environments to which the built-up version of the fastened structure 500 is expected to be exposed such that the fastener element model 404 responds to the at least one simulated load 616 in a manner that effects the detected load conditions 618. In yet another further example, the fastener element model 404 includes a zero-stiffness model that has no effect on the detected load conditions 618.

In yet another example, the method 100 also includes validating 112 the electronic design model 400 of the fastened structure 500 where the detected load conditions 618 are within a predetermined tolerance of the predetermined measurement thresholds 620.

With reference again to Figs. 1, 2 and 4-6, in one or more examples, a method 200 (see Fig. 2) for analysis of a fastened structure includes the method 100 (see Fig. 1) described above. In one example, the method 200 continues from 110 of method 100 to 202 where the electronic design model 400 of the fastened structure 500 is changed to form a revised design model of a revised structure where the detected load conditions 622 are not within a predetermined tolerance of the predetermined measurement thresholds 620. At 204, the method 200 for analysis of the fastened structure 500 is repeated based on the revised design model of the revised structure by retuning to 102 of method 100. In a further example, the electronic design model 400 is changed by changing one or more structural element 502 of the at least two structural elements 502, changing one or more fastener element 504 of the plurality of fastener elements 504, adding one or more fastener element 504 to the plurality of fastener elements 504, removing one or more fastener element 504 from the plurality of fastener elements 504 or any other suitable change to the electronic design model in any suitable combination.

With reference again to Figs. 1 and 3-6, in one or more examples, a method 300 (see Fig. 3) for analysis of a fastened structure includes the method 100 (see Fig. 1) described above. In this example, the at least one sensor element model 402 includes a plurality of sensor element models 402. In one example, the method 300 continues from 110 of method 100 to 302 where distributed load conditions 622 for the fastened structure 500 are determined based on the load conditions 618 detected by the plurality of sensor element models 402. At 304, the distributed load conditions 622 are compared to predetermined distributed thresholds 624 for the distributed load conditions 622.

In a further example of method 300, the distributed load conditions 622 include a distributed displacement condition, a distributed rotation condition, a distributed stiffness condition, a distributed clamp-up condition, a distributed deformation condition, a distributed damage state condition or any other suitable distributed load condition in any suitable combination. Many of the detected load conditions 618 are due to the fastened structure including different types of structural elements with different thermal expansion characteristics. For example, the fastened structure may include various types of composite structural elements (e.g., thermoplastic composites) and non-composite structural elements (e.g., titanium).

In another further example, the method 300 also includes validating 306 the electronic design model 400 of the fastened structure 500 where the distributed load conditions 622 are within a predetermined tolerance of the predetermined distributed thresholds 624.

In yet another further example, the method 300 also includes changing 308 the electronic design model 400 of the fastened structure 500 to form a revised design model of a revised structure where the distributed load conditions 622 are not within a predetermined tolerance of the predetermined distributed thresholds 624. At 310, the method 300 for analysis of the fastened structure 500 is repeated based on the revised design model of the revised structure by retuning to 102 of method 100. In an even further example, the electronic design model 400 is changed by changing one or more structural element 502 of the at least two structural elements 502, changing one or more fastener element 504 of the plurality of fastener elements 504, adding one or more fastener element 504 to the plurality of fastener elements 504, removing one or more fastener element 504 from the plurality of fastener elements 504 or any other suitable change to the electronic design model in any suitable combination.

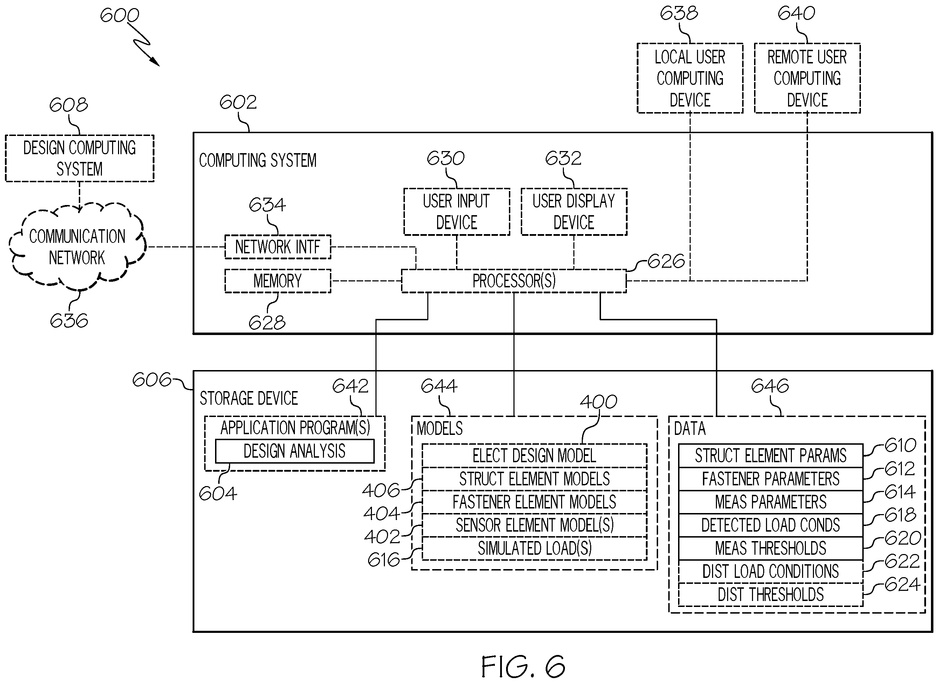

Referring generally to Figs. 4-6, by way of examples, the present disclosure is directed to a fastened structure management system 600. Fig. 4 discloses an example of an electronic design model 400. Fig. 5 discloses an example of a fastened structure 500. Fig. 6 shows the fastened structure management system 600 with a computing system 602 and a storage device 606 storing a design analysis application program 604 accessible to the computing system 602.

With reference again to Figs. 4-6, in one or more examples, a fastened structure management system 600 includes a computing system 602 and a storage device 606. The computing system 602 configured to run a design analysis application program 604. The storage device 606 in operative communication with the computing system 602. In conjunction with running the design analysis application program 604, the computing system 602 is configured to access an electronic design model 400 of a fastened structure 500 from a design computing system 608. The fastened structure 500 includes at least two structural elements 502 assembled via a plurality of fastener elements 504. The electronic design model 400 includes structural element parameters 610 for each structural element 502 and fastener parameters 612 for each fastener element 504. The structural element parameters 610 and the fastener parameters 612 are representative of characteristics and behaviors of the corresponding structural elements 502 and the corresponding fastener elements 504 in environments to which a built-up version of the fastened structure 500 is expected to be exposed. In conjunction with running the design analysis application program 604, the computing system 602 is also configured to embed at least one sensor element model 402 within the electronic design model 400. Each sensor element model 402 is embedded at a select location relating to a select joint between two or more structural elements 502 of the at least two structural elements 502. The at least one sensor element model 402 configured to monitor measurement parameters 614 at the select location in response to one or more simulated load 616 applied to the electronic design model 400.

Additionally, in conjunction with running the design analysis application program 604, the computing system 602 is configured to apply at least one simulated load 616 to the electronic design model 400. In conjunction with running the design analysis application program 604, the computing system 602 is also configured to monitor the measurement parameters 614 using the at least one sensor element model 402 to detect load conditions 618 at the corresponding select location based on the at least one simulated load 616. In addition, in conjunction with running the design analysis application program 604, the computing system 602 is also configured to compare the detected load conditions 618 to predetermined measurement thresholds 620 for the monitored measurement parameters 614.

In another example of the fastened structure management system 600, the fastened structure 500 includes three or more structural elements 502 assembled via the plurality of fastener elements 504. In yet another example of the fastened structure management system 600, the fastened structure 500 forms a product structure, a vehicle structure, an automotive vehicle structure, an air vehicle structure, an aircraft structure, a missile structure, a rocket structure, a launch structure, a satellite structure, a bridge structure, a tunnel structure or any other suitable structure with multiple parts that are fastened together.

In still another example of the fastened structure management system 600, the plurality of fastener elements 504 includes a set of fastener elements 504. In this example, the at least two structural elements 502 include at least one composite structural element and at least one non-composite structural element. The at least one non-composite structural element is joined to one or more of the at least one composite structural element via the set of fastener elements 504. In a further example, the plurality of fastener elements 504 and the set of fastener elements 504 include metal fasteners, metal screws, metal machine screws, metal bolts, metal pins, metal rivets, metal nuts, metal retaining mechanisms or any other suitable fastener part in any suitable combination. In another further example, the at least one composite structural element includes a thermoplastic composite, a thermoset composite, a reinforced composite, a fiber reinforced composite, a carbon fiber reinforced composite, a reinforced polymer, a fiber reinforced polymer, a carbon fiber reinforced polymer or any other suitable composite material in any suitable combination. In yet another further example, the at least one non-composite structural element includes titanium, a titanium-based metal, a titanium alloy, Ti-6A1-4V, Ti 6-4, aluminum, an aluminum-based metal, an aluminum alloy, vanadium, a vanadium-based metal, a vanadium alloy, paper, foam, resin, metal, an additive or any other suitable non-composite solid material in any suitable combination.

In still yet another example of the fastened structure management system 600, the plurality of fastener elements 504 are represented in the electronic design model 400 as a plurality of fastener element models 404. In other words, the fastener element models are modeled structural elements that are represented in software, such as ABAQUS° or LS-DYNA. In a further example, each fastener element model 404 is represented in the electronic design model 400) as a truss element, a beam element, a shell element or any other suitable finite element in any suitable combination.

In another example of the fastened structure management system 600, the at least two structural elements 502 are represented in the electronic design model 400 as at least two structural element models 406. In other words, the structural element models are modeled structural elements that are represented in software, such as ABAQUS° or LS-DYNA. In a further example, each structural element model 406 is represented in the electronic design model 400 as a beam element, a shell element, a solid element or any other suitable finite element in any suitable combination. For example, the electronic design model 400 can be viewed as a mesh of structural element models 406.

In yet another example of the fastened structure management system 600, each sensor element model 402 is represented in the electronic design model 400 as at a truss element, a beam element, a shell element or any other suitable finite element in any suitable combination. In other words, the sensor element models are modeled structural elements that are represented in software, such as ABAQUS^{®} or LS-DYNA.

In still another example of the fastened structure management system 600, the select location includes a select surface location of the at least two structural elements 502, a select interior location of the at least two structural elements 502, a select gap location between the at least two structural elements 502, a select overlap location for two or more structural elements 502 of the at least two structural elements 502 or any other suitable location associated with the at least two structural elements 502.

In still yet another example of the fastened structure management system 600, the at least one simulated load 616 includes a simulated thermal load, a simulated hygric load, a simulated mechanical load, a simulated structural load, a simulated axial load or any other suitable simulated load in any suitable combination. The simulated loads may be applied as a constant, in a cyclic manner, as a static load, as an ambient load, with a high rate of change, dynamically, as an impact load, in a wave manner or in any other suitable application technique.

In another example of the fastened structure management system 600, the detected load conditions 618 includes a displacement condition, a rotation condition, a stiffness condition, a clamp-up condition, a deformation condition, a damage state condition or any other suitable detected load condition in any suitable combination. Many of the detected load conditions 618 are due to the fastened structure including different types of structural elements with different thermal expansion characteristics. For example, the fastened structure may include various types of composite structural elements (e.g., thermoplastic composites) and non-composite structural elements (e.g., titanium).

In yet another example of the fastened structure management system 600, the at least one sensor element model 402 includes a zero-stiffness model that has no effect on the detected load conditions 618. In still another example of the fastened structure management system 600, the at least one sensor element model 402 includes a one-dimensional element model, a two-dimensional element model or any other suitable finite element model in any suitable combination. In still yet another example of the fastened structure management system 600, the at least one sensor element model 402 is representative of a strain measurement device, an extensometer, a strain gauge, a strain transducer, a load sensor, a load cell, a force sensor, a piezoresistive force sensor, a torque sensor, a torque transducer, a torque cell, a stiffness sensor, a tactile sensor or any other suitable sensor in any suitable combination.

In another example of the fastened structure management system 600, the at least one sensor element model 402 includes at least one fastener element model 404 associated with at least one fastener element model 404 of the plurality of fastener elements 504. In a further example, the fastener element model 404 includes a one-dimensional element model or any other suitable finite element model in any suitable combination. In another further example, the fastener element model 404 includes a calibrated model with fastener parameters 612 representative of characteristics and behaviors of an actual fastener in environments to which the built-up version of the fastened structure 500 is expected to be exposed such that the fastener element model 404 responds to the at least one simulated load 616 in a manner that effects the detected load conditions 618. In yet another further example, the fastener element model 404 includes a zero-stiffness model that has no effect on the detected load conditions 618.

In yet another example of the fastened structure management system 600, in conjunction with running the design analysis application program 604, the computing system 602 is configured to validate the electronic design model 400 of the fastened structure 500 where the detected load conditions 618 are within a predetermined tolerance of the predetermined measurement thresholds 620.

In still another example of the fastened structure management system 600, the at least one sensor element model 402 includes a plurality of sensor element models 402. In a further example, in conjunction with running the design analysis application program 604, the computing system 602 is configured to determine distributed load conditions 622 for the fastened structure 500 based on the load conditions 618 detected by the plurality of sensor element models 402. The computing system 602 is also configured to compare the distributed load conditions 622 to predetermined distributed thresholds 624 for the distributed load conditions 622. In an even further example, the distributed load conditions 622 includes a distributed displacement condition, a distributed rotation condition, a distributed stiffness condition, a distributed clamp-up condition, a distributed deformation condition, a distributed damage state condition or any other suitable distributed load condition in any suitable combination. Many of the distributed load conditions 622 are due to the fastened structure including different types of structural elements with different thermal expansion characteristics. For example, the fastened structure may include various types of composite structural elements (e.g., thermoplastic composites) and non-composite structural elements (e.g., titanium). In another even further example, in conjunction with running the design analysis application program 604, the computing system 602 is configured to validate the electronic design model 400 of the fastened structure 500 where the distributed load conditions 622 are within a predetermined tolerance of the predetermined distributed thresholds 624.

In one or more additional examples of the fastened structure management system 600, the computing system 602 may also include at least one processor 626 and associated memory 628, a user input device 630, a user display device 632 and a network interface 634 in operative communication with the design computing system 608 via a communication network 636. The computing system 602 may be in operative communication with a local user computing device 638 and/or a remote user computing device 640. The storage device 606 may include allocated storage areas for storing at least one application program 642, models 644 and data 646.

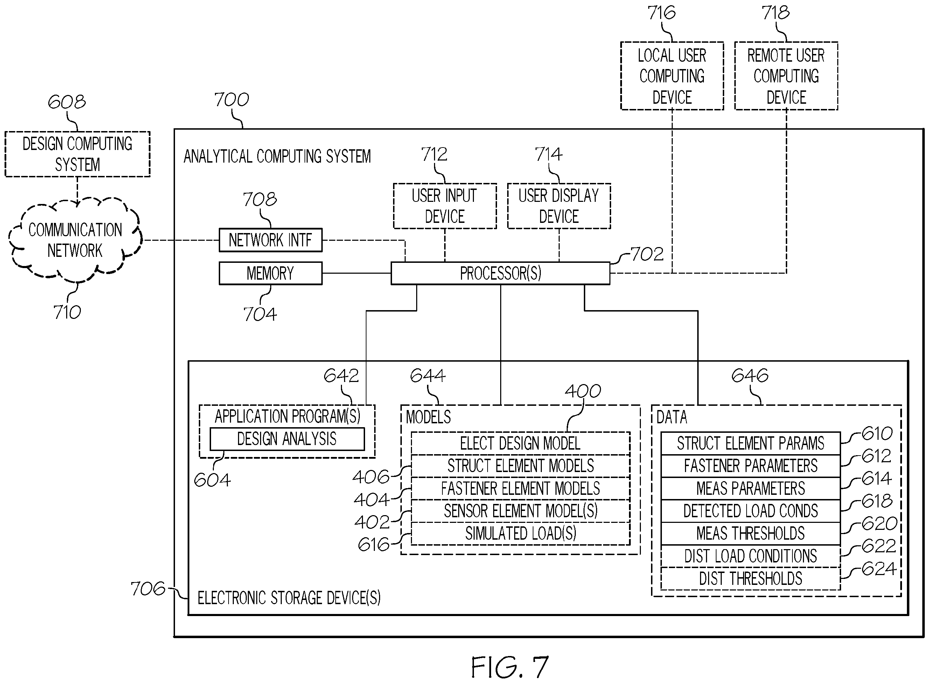

Referring generally to Figs. 4-7, by way of examples, the present disclosure is directed to an analytical computing system 700. Fig. 4 discloses an example of an electronic design model 400. Fig. 5 discloses an example of a fastened structure 500. Fig. 6 shows a fastened structure management system 600 with certain components that may be implemented in the analytical computing system 700. Fig. 7 shows the analytical computing system 700 with at least one processor 702 and at least one electronic storage device 706 storing a design analysis application program 604 accessible to the at least one processor 702.

With reference again to Figs. 4-7, in one or more examples, an analytical computing system 700 includes at least one processor 702, associated memory 704, at least one electronic storage device 706 and a network interface 708. The at least one electronic storage device 706 storing a design analysis application program 604. The network interface 708 in operative communication with the at least one processor 702 and configured to interface with a communication network 710. The analytical computing system 700, in conjunction with the at least one processor 702 running the design analysis application program 604, is configured to access an electronic design model 400 of a fastened structure 500 from a design computing system 608 via the network interface 708 and the communication network 710. The fastened structure 500 includes at least two structural elements 502 assembled via a plurality of fastener elements 504. The electronic design model 400 includes structural element parameters 610 for each structural element 502 and fastener parameters 612 for each fastener element 504. The structural element parameters 610 and the fastener parameters 612 are representative of characteristics and behaviors of the corresponding structural elements 502 and the corresponding fastener elements 504 in environments to which a built-up version of the fastened structure 500 is expected to be exposed. The analytical computing system 700, in conjunction with the at least one processor 702 running the design analysis application program 604, is also configured to embed at least one sensor element model 402 within the electronic design model 400. Each sensor element model 402 is embedded at a select location relating to a select joint between two or more structural elements 502 of the at least two structural elements 502. The at least one sensor element model 402 configured to monitor measurement parameters 614 at the select location in response to one or more simulated load 616 applied to the electronic design model 400.

Additionally, the analytical computing system 700, in conjunction with the at least one processor 702 running the design analysis application program 604, is configured to apply at least one simulated load 616 to the electronic design model 400. The analytical computing system 700, in conjunction with the at least one processor 702 running the design analysis application program 604, is also configured to monitor the measurement parameters 614 using the at least one sensor element model 402 to detect load conditions 618 at the corresponding select location based on the at least one simulated load 616. In addition, the analytical computing system 700, in conjunction with the at least one processor 702 running the design analysis application program 604, is configured to compare the detected load conditions 618 to predetermined measurement thresholds 620 for the monitored measurement parameters 614.

In another example of the analytical computing system 700, the at least one electronic storage device 706 is configured to store the at least one sensor element model 402, the measurement parameters 614 associated with the at least one sensor element model 402 and the predetermined measurement thresholds 620 associated with the measurement parameters 614.

In yet another example of the analytical computing system 700, the fastened structure 500 includes three or more structural elements 502 assembled via the plurality of fastener elements 504. In still another example of the analytical computing system 700, the fastened structure 500 forms a product structure, a vehicle structure, an automotive vehicle structure, an air vehicle structure, an aircraft structure, a missile structure, a rocket structure, a launch structure, a satellite structure, a bridge structure, a tunnel structure or any other suitable structure with multiple parts that are fastened together.

In still yet another example of the analytical computing system 700, the plurality of fastener elements 504 include a set of fastener elements 504. The at least two structural elements 502 includes at least one composite structural element and at least one non-composite structural element. The at least one non-composite structural element is joined to one or more of the at least one composite structural element via the set of fastener elements 504. In a further example, the plurality of fastener elements 504 and the set of fastener elements 504 include metal fasteners, metal screws, metal machine screws, metal bolts, metal pins, metal rivets, metal nuts, metal retaining mechanisms or any other suitable fastener part in any suitable combination. In another further example, the at least one composite structural element includes a thermoplastic composite, a thermoset composite, a reinforced composite, a fiber reinforced composite, a carbon fiber reinforced composite, a reinforced polymer, a fiber reinforced polymer, a carbon fiber reinforced polymer or any other suitable composite material in any suitable combination. In yet another further example, the at least one non-composite structural element includes titanium, a titanium-based metal, a titanium alloy, Ti-6Al-4V, Ti 6-4, aluminum, an aluminum-based metal, an aluminum alloy, vanadium, a vanadium-based metal, a vanadium alloy, paper, foam, resin, metal, an additive or any other suitable non-composite solid material in any suitable combination.

In another example of the analytical computing system 700, the plurality of fastener elements 504 are represented in the electronic design model 400 as a plurality of fastener element models 404. In other words, the fastener element models are modeled structural elements that are represented in software, such as ABAQUS° or LS-DYNA. In a further example, each fastener element model 404 is represented in the electronic design model 400 as a truss element, a beam element, a shell element or any other suitable finite element in any suitable combination.

In yet another example of the analytical computing system 700, the at least two structural elements 502 are represented in the electronic design model 400 as at least two structural element models 406. In other words, the structural element models are modeled structural elements that are represented in software, such as ABAQUS^{®} or LS-DYNA. In a further example, each structural element model 406 is represented in the electronic design model 400 as a beam element, a shell element, a solid element or any other suitable finite element in any suitable combination. For example, the electronic design model 400 can be viewed as a mesh of structural element models 406.

In still another example of the analytical computing system 700, each sensor element model 402 is represented in the electronic design model 400 as a truss element, a beam element, a shell element or any other suitable finite element in any suitable combination. In other words, the sensor element models are modeled structural elements that are represented in software, such as ABAQUS^{®} or LS-DYNA.

In still yet another example of the analytical computing system 700, the select location includes a select surface location of the at least two structural elements 502, a select interior location of the at least two structural elements 502, a select gap location between the at least two structural elements 502, a select overlap location for two or more structural elements 502 of the at least two structural elements 502 or any other suitable location associated with the at least two structural elements 502.

In another example of the analytical computing system 700, the at least one simulated load 616 includes a simulated thermal load, a simulated hygric load, a simulated mechanical load, a simulated structural load, a simulated axial load or any other suitable simulated load in any suitable combination. The simulated loads may be applied as a constant, in a cyclic manner, as a static load, as an ambient load, with a high rate of change, dynamically, as an impact load, in a wave manner or in any other suitable application technique.

In yet another example of the analytical computing system 700, the detected load conditions 618 includes a displacement condition, a rotation condition, a stiffness condition, a clamp-up condition, a deformation condition, a damage state condition or any other suitable detected load condition in any suitable combination. Many of the detected load conditions 618 are due to the fastened structure including different types of structural elements with different thermal expansion characteristics. For example, the fastened structure may include various types of composite structural elements (e.g., thermoplastic composites) and non-composite structural elements (e.g., titanium).

In still another example of the analytical computing system 700, the at least one sensor element model 402 includes a zero-stiffness model that has no effect on the detected load conditions 618. In still yet another example of the analytical computing system 700, the at least one sensor element model 402 includes a one-dimensional element model, a two-dimensional element model or any other suitable finite element model in any suitable combination. In another example of the analytical computing system 700, the at least one sensor element model 402 is representative of a strain measurement device, an extensometer, a strain gauge, a strain transducer, a load sensor, a load cell, a force sensor, a piezoresistive force sensor, a torque sensor, a torque transducer, a torque cell, a stiffness sensor, a tactile sensor or any other suitable sensor in any suitable combination.

In yet another example of the analytical computing system 700, the at least one sensor element model 402 includes at least one fastener element model 404 associated with at least one fastener element model 404 of the plurality of fastener elements 504. In a further example, the fastener element model 404 includes a one-dimensional element model or any other suitable finite element model in any suitable combination. In another further example, the fastener element model 404 includes a calibrated model with fastener parameters 612 representative of characteristics and behaviors of an actual fastener in environments to which the built-up version of the fastened structure 500 is expected to be exposed such that the fastener element model 404 responds to the at least one simulated load 616 in a manner that effects the detected load conditions 618. In yet another further example, the fastener element model 404 includes a zero-stiffness model that has no effect on the detected load conditions 618.

In still another example of the analytical computing system 700, the analytical computing system 700, in conjunction with the at least one processor 702 running the design analysis application program 604, is configured to validate the electronic design model 400 of the fastened structure 500 where the detected load conditions 618 are within a predetermined tolerance of the predetermined measurement thresholds 620.

In still yet another example of the analytical computing system 700, the at least one sensor element model 402 includes a plurality of sensor element models 402. In a further example, the analytical computing system 700, in conjunction with the at least one processor 702 running the design analysis application program 604, is configured to determine distributed load conditions 622 for the fastened structure 500 based on the load conditions 618 detected by the plurality of sensor element models 402. Additionally, the analytical computing system 700, in conjunction with the at least one processor 702 running the design analysis application program 604, is configured to compare the distributed load conditions 622 to predetermined distributed thresholds 624 for the distributed load conditions 622. In an even further example, the distributed load conditions 622 include a distributed displacement condition, a distributed rotation condition, a distributed stiffness condition, a distributed clamp-up condition, a distributed deformation condition, a distributed damage state condition or any other suitable distributed load condition in any suitable combination. Many of the distributed load conditions 622 are due to the fastened structure including different types of structural elements with different thermal expansion characteristics. For example, the fastened structure may include various types of composite structural elements (e.g., thermoplastic composites) and non-composite structural elements (e.g., titanium). In another even further example, the analytical computing system 700, in conjunction with the at least one processor 702 running the design analysis application program 604, is configured to validate the electronic design model 400 of the fastened structure 500 where the distributed load conditions 622 are within a predetermined tolerance of the predetermined distributed thresholds 624.

In one or more additional examples, the analytical computing system 700 may also include a user input device 712 and a user display device 714. The analytical computing system 700 may be in operative communication with a local user computing device 716 and/or a remote user computing device 718. The at least one electronic storage device 706 may include allocated storage areas for storing at least one application program 642, models 644 and data 646.

Examples of methods 100, 200, 300, electronic design models 400, fastened structure management systems 600 and analytical computing system 700 for analysis of fastened structures 500 may be related to or used in the context of aircraft design and manufacture. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to methods for analysis of fastened structures in the design and manufacture of various types of vehicles and in the design and construction of various types of transportation structures.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-3, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 1-3 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Figs. 4-7, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 4-7, referred to above, need be included in every example and not all elements, features, and/or components described herein are necessarily depicted in each illustrative example. Accordingly, some of the elements, features, and/or components described and illustrated in Figs. 4-7 may be combined in various ways without the need to include other features described and illustrated in Figs. 4-7, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 4-7, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 4-7, and such elements, features, and/or components may not be discussed in detail herein with reference to each of Figs. 4-7. Similarly, all elements, features, and/or components may not be labeled in each of Figs. 4-7, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

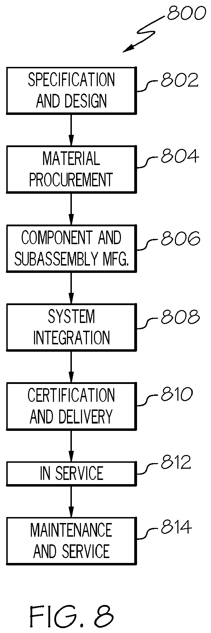

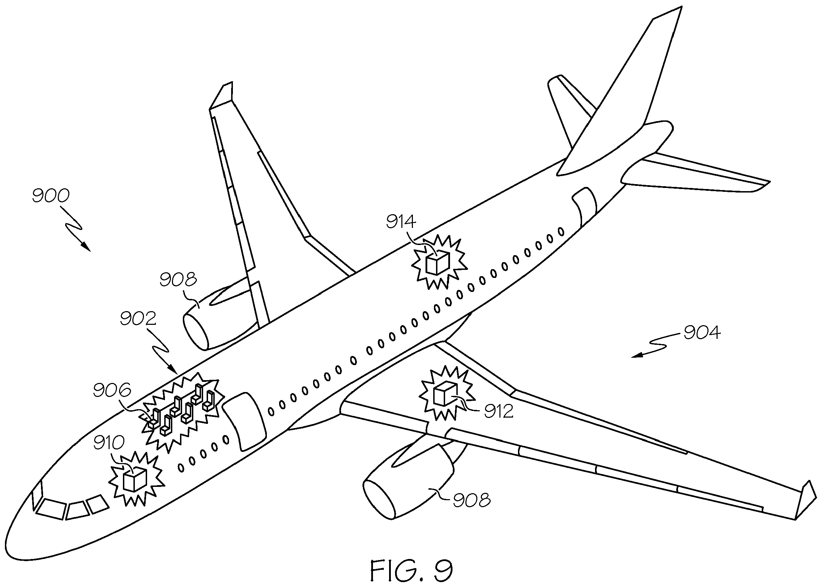

Examples of the subject matter disclosed herein may be described in the context of aircraft manufacturing and service method 800 as shown in Fig. 8 and aircraft 900 as shown in Fig. 9. In one or more examples, the disclosed methods and systems for analysis of fastened structures may be used in aircraft manufacturing. During pre-production, the service method 800 may include specification and design (block 802) of aircraft 900 and material procurement (block 804). During production, component and subassembly manufacturing (block 806) and system integration (block 808) of aircraft 900 may take place. Thereafter, aircraft 900 may go through certification and delivery (block 810) to be placed in service (block 812). While in service, aircraft 900 may be scheduled for routine maintenance and service (block 814). Routine maintenance and service may include modification, reconfiguration, refurbishment, etc. of one or more systems of aircraft 900.

Each of the processes of the service method 800 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 9, aircraft 900 produced by the service method 800 may include airframe 902 with a plurality of high-level systems 904 and interior 906. Examples of high-level systems 904 include one or more of propulsion system 908, electrical system 910, hydraulic system 912, and environmental system 914. Any number of other systems may be included. Although an aerospace example is shown, the principles disclosed herein may be applied to other industries, such as the automotive industry. Accordingly, in addition to aircraft 900, the principles disclosed herein may apply to other vehicles, e.g., land vehicles, marine vehicles, space vehicles, etc.

The disclosed methods and systems for analysis of fastened structures may be employed during any one or more of the stages of the manufacturing and service method 800. For example, components or subassemblies corresponding to component and subassembly manufacturing (block 806) may be fabricated or manufactured in a manner similar to components or subassemblies produced while aircraft 900 is in service (block 812). Also, one or more examples of the tooling set(s), system(s), method(s), or any combination thereof may be utilized during production stages (block 806 and block 808), for example, by substantially expediting assembly of or reducing the cost of aircraft 900. Similarly, one or more examples of the tooling set, system or method realizations, or a combination thereof, may be utilized, for example and without limitation, while aircraft 900 is in service (block 812) and/or during maintenance and service (block 814).

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 200, 300, fastened structure management systems 600 and analytical computing systems 700 for analysis of fastened structures 500 have been shown and described, modifications may occur to those skilled in the art upon reading the specification. The present application includes such modifications and is limited only by the scope of the claims.

Also provided are the following illustrative, non-exhaustive examples of the subject-matter encompassed herein, which relate to:

A method for analysis of a fastened structure, comprising: accessing an electronic design model of the fastened structure, the fastened structure comprising at least two structural elements assembled via a plurality of fastener elements, the electronic design model comprising structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; embedding at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; applying at least one simulated load to the electronic design model; monitoring the measurement parameters using the at least one sensor element model to detect load conditions at the corresponding select location based on the at least one simulated load; and comparing the detected load conditions to predetermined measurement thresholds for the monitored measurement parameters.

The method described in the immediately preceding paragraph, wherein the fastened structure comprises three or more structural elements assembled via the plurality of fastener elements.

The method described in the first one of the two immediately preceding paragraphs, wherein the fastened structure forms at least one of a product structure, a vehicle structure, an automotive vehicle structure, an air vehicle structure, an aircraft structure, a missile structure, a rocket structure, a launch structure, a satellite structure, a bridge structure and a tunnel structure.

The method described in the first one of the three immediately preceding paragraphs, wherein the plurality of fastener elements comprises a set of fastener elements, wherein the at least two structural elements comprise at least one composite structural element and at least one non-composite structural element, wherein the at least one non-composite structural element is joined to one or more of the at least one composite structural element via the set of fastener elements.

The method described in the immediately preceding paragraph, wherein the plurality of fastener elements and the set of fastener elements comprise at least one of metal fasteners, metal screws, metal machine screws, metal bolts, metal pins, metal rivets, metal nuts and metal retaining mechanisms.

The method described in the first one of the two immediately preceding paragraphs, wherein the at least one composite structural element comprises at least one of a thermoplastic composite, a thermoset composite, a reinforced composite, a fiber reinforced composite, a carbon fiber reinforced composite, a reinforced polymer, a fiber reinforced polymer and a carbon fiber reinforced polymer.

The method described in the first one of the three immediately preceding paragraphs, wherein the at least one non-composite structural element comprises at least one of titanium, a titanium-based metal, a titanium alloy, Ti-6Al-4V, Ti 6-4, aluminum, an aluminum-based metal, an aluminum alloy, vanadium, a vanadium-based metal and a vanadium alloy.

The method described in the first one of the seven immediately preceding paragraphs, wherein the plurality of fastener elements are represented in the electronic design model as a plurality of fastener element models.

The method described in the immediately preceding paragraph, wherein each fastener element model is represented in the electronic design model as a truss element, a beam element or a shell element.

The method described in the first one of the nine immediately preceding paragraphs, wherein the at least two structural elements are represented in the electronic design model as at least two structural element models.

The method described in the immediately preceding paragraph, wherein each structural element model is represented in the electronic design model as a beam element, a shell element or a solid element.

The method described in the first one of the eleven immediately preceding paragraphs, wherein each sensor element model is represented in the electronic design model as a truss element, a beam element or a shell element.

The method described in the first one of the twelve immediately preceding paragraphs, wherein the select location comprises at least one of a select surface location of the at least two structural elements, a select interior location of the at least two structural elements, a select gap location between the at least two structural elements and a select overlap location for two or more structural elements of the at least two structural elements.

The method described in the first one of the thirteen immediately preceding paragraphs, wherein the at least one simulated load comprises at least one of a simulated thermal load, a simulated hygric load, a simulated mechanical load, a simulated structural load and a simulated axial load.

The method described in the first one of the fourteen immediately preceding paragraphs, wherein the detected load conditions comprise at least one of a displacement condition, a rotation condition, a stiffness condition, a clamp-up condition, a deformation condition and a damage state condition.

The method described in the first one of the fifteen immediately preceding paragraphs, wherein the at least one sensor element model comprises a zero-stiffness model that has no effect on the detected load conditions.

The method described in the first one of the sixteen immediately preceding paragraphs, wherein the at least one sensor element model comprises at least one of a one-dimensional element model and a two-dimensional element model.

The method described in the first one of the seventeen immediately preceding paragraphs, wherein the at least one sensor element model is representative of at least one of a strain measurement device, an extensometer, a strain gauge, a strain transducer, a load sensor, a load cell, a force sensor, a piezoresistive force sensor, a torque sensor, a torque transducer, a torque cell, a stiffness sensor and a tactile sensor.

The method described in the first one of the eighteen immediately preceding paragraphs, wherein the at least one sensor element model comprises at least one fastener element model associated with at least one fastener element model of the plurality of fastener elements.

The method described in the immediately preceding paragraph, wherein the fastener element model comprises a one-dimensional element model.

The method described in the first one of the two immediately preceding paragraphs, wherein the fastener element model comprises a calibrated model with fastener parameters representative of characteristics and behaviors of an actual fastener in environments to which the built-up version of the fastened structure is expected to be exposed such that the fastener element model responds to the at least one simulated load in a manner that effects the detected load conditions.

The method described in the first one of the three immediately preceding paragraphs, wherein the fastener element model comprises a zero-stiffness model that has no effect on the detected load conditions.

The method described in the first one of the twenty-two immediately preceding paragraphs, further comprising: validating the electronic design model of the fastened structure where the detected load conditions are within a predetermined tolerance of the predetermined measurement thresholds.

The method described in the first one of the twenty-three immediately preceding paragraphs, further comprising: changing the electronic design model of the fastened structure to form a revised design model of a revised structure where the detected load conditions are not within a predetermined tolerance of the predetermined measurement thresholds; and repeating the method for analysis of the fastened structure based on the revised design model of the revised structure.

The method described in the immediately preceding paragraph, wherein the electronic design model is changed by at least one of changing one or more structural element of the at least two structural elements, changing one or more fastener element of the plurality of fastener elements, adding one or more fastener element to the plurality of fastener elements and removing one or more fastener element from the plurality of fastener elements.

The method described in the first one of the twenty-five immediately preceding paragraphs, wherein the at least one sensor element model comprises a plurality of sensor element models.

The method described in the immediately preceding paragraph, further comprising: determining distributed load conditions for the fastened structure based on the load conditions detected by the plurality of sensor element models; and comparing the distributed load conditions to predetermined distributed thresholds for the distributed load conditions.

The method described in the immediately preceding paragraph, wherein the distributed load conditions comprise at least one of a distributed displacement condition, a distributed rotation condition, a distributed stiffness condition, a distributed clamp-up condition, a distributed deformation condition and a distributed damage state condition.

The method described in the first one of the two immediately preceding paragraphs, further comprising: validating the electronic design model of the fastened structure where the distributed load conditions are within a predetermined tolerance of the predetermined distributed thresholds.

The method described in the first one of the three immediately preceding paragraphs, further comprising: changing the electronic design model of the fastened structure to form a revised design model of a revised structure where the distributed load conditions are not within a predetermined tolerance of the predetermined distributed thresholds; and repeating the method for analysis of the fastened structure based on the revised design model of the revised structure.

The method described in the immediately preceding paragraph, wherein the electronic design model is changed by at least one of changing one or more structural element of the at least two structural elements, changing one or more fastener element of the plurality of fastener elements, adding one or more fastener element to the plurality of fastener elements and removing one or more fastener element from the plurality of fastener elements.

A fastened structure management system, comprising: a computing system configured to run a design analysis application program; and a storage device in operative communication with the computing system; wherein, in conjunction with running the design analysis application program, the computing system is configured to: access an electronic design model of a fastened structure from a design computing system, the fastened structure comprising at least two structural elements assembled via a plurality of fastener elements, the electronic design model comprising structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; embed at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; apply at least one simulated load to the electronic design model; monitor the measurement parameters using the at least one sensor element model to detect load conditions at the corresponding select location based on the at least one simulated load; and compare the detected load conditions to predetermined measurement thresholds for the monitored measurement parameters.

The fastened structure management system described in the immediately preceding paragraph, wherein the fastened structure comprises three or more structural elements assembled via the plurality of fastener elements.

The fastened structure management system described in the first one of the two immediately preceding paragraphs, wherein the fastened structure forms at least one of a product structure, a vehicle structure, an automotive vehicle structure, an air vehicle structure, an aircraft structure, a missile structure, a rocket structure, a launch structure, a satellite structure, a bridge structure and a tunnel structure.

The fastened structure management system described in the first one of the three immediately preceding paragraphs, wherein the plurality of fastener elements comprises a set of fastener elements, wherein the at least two structural elements comprise at least one composite structural element and at least one non-composite structural element, wherein the at least one non-composite structural element is joined to one or more of the at least one composite structural element via the set of fastener elements.

The fastened structure management system described in the immediately preceding paragraph, wherein the plurality of fastener elements and the set of fastener elements comprise at least one of metal fasteners, metal screws, metal machine screws, metal bolts, metal pins, metal rivets, metal nuts and metal retaining mechanisms.

The fastened structure management system described in the first one of the two immediately preceding paragraphs, wherein the at least one composite structural element comprises at least one of a thermoplastic composite, a thermoset composite, a reinforced composite, a fiber reinforced composite, a carbon fiber reinforced composite, a reinforced polymer, a fiber reinforced polymer and a carbon fiber reinforced polymer.

The fastened structure management system described in the first one of the three immediately preceding paragraphs, wherein the at least one non-composite structural element comprises at least one of titanium, a titanium-based metal, a titanium alloy, Ti-6A1-4V, Ti 6-4, aluminum, an aluminum-based metal, an aluminum alloy, vanadium, a vanadium-based metal and a vanadium alloy.

The fastened structure management system described in the first one of the seven immediately preceding paragraphs, wherein the plurality of fastener elements are represented in the electronic design model as a plurality of fastener element models.

The fastened structure management system described in the immediately preceding paragraph, wherein each fastener element model is represented in the electronic design model as a truss element, a beam element or a shell element.

The fastened structure management system described in the first one of the nine immediately preceding paragraphs, wherein the at least two structural elements are represented in the electronic design model as at least two structural element models.

The fastened structure management system described in the immediately preceding paragraph, wherein each structural element model is represented in the electronic design model as a beam element, a shell element or a solid element.

The fastened structure management system described in the first one of the eleven immediately preceding paragraphs, wherein each sensor element model is represented in the electronic design model as at a truss element, a beam element or a shell element.

The fastened structure management system described in the first one of the twelve immediately preceding paragraphs, wherein the select location comprises at least one of a select surface location of the at least two structural elements, a select interior location of the at least two structural elements, a select gap location between the at least two structural elements and a select overlap location for two or more structural elements of the at least two structural elements.

The fastened structure management system described in the first one of the thirteen immediately preceding paragraphs, wherein the at least one simulated load comprises at least one of a simulated thermal load, a simulated hygric load, a simulated mechanical load, a simulated structural load and a simulated axial load.

The fastened structure management system described in the first one of the fourteen immediately preceding paragraphs, wherein the detected load conditions comprise at least one of a displacement condition, a rotation condition, a stiffness condition, a clamp-up condition, a deformation condition and a damage state condition.

The fastened structure management system described in the first one of the fifteen immediately preceding paragraphs, wherein the at least one sensor element model comprises a zero-stiffness model that has no effect on the detected load conditions.

The fastened structure management system described in the first one of the sixteen immediately preceding paragraphs, wherein the at least one sensor element model comprises at least one of a one-dimensional element model and a two-dimensional element model.

The fastened structure management system described in the first one of the seventeen immediately preceding paragraphs, wherein the at least one sensor element model is representative of at least one of a strain measurement device, an extensometer, a strain gauge, a strain transducer, a load sensor, a load cell, a force sensor, a piezoresistive force sensor, a torque sensor, a torque transducer, a torque cell, a stiffness sensor and a tactile sensor.

The fastened structure management system described in the first one of the eighteen immediately preceding paragraphs, wherein the at least one sensor element model comprises at least one fastener element model associated with at least one fastener element model of the plurality of fastener elements.

The fastened structure management system described in the immediately preceding paragraph, wherein the fastener element model comprises a one-dimensional element model.

The fastened structure management system described in the first one of the two immediately preceding paragraphs, wherein the fastener element model comprises a calibrated model with fastener parameters representative of characteristics and behaviors of an actual fastener in environments to which the built-up version of the fastened structure is expected to be exposed such that the fastener element model responds to the at least one simulated load in a manner that effects the detected load conditions.

The fastened structure management system described in the first one of the three immediately preceding paragraphs, wherein the fastener element model comprises a zero-stiffness model that has no effect on the detected load conditions.

The fastened structure management system described in the first one of the twenty-two immediately preceding paragraphs, wherein, in conjunction with running the design analysis application program, the computing system is configured to validate the electronic design model of the fastened structure where the detected load conditions are within a predetermined tolerance of the predetermined measurement thresholds.

The fastened structure management system described in the first one of the twenty-three immediately preceding paragraphs, wherein the at least one sensor element model comprises a plurality of sensor element models.

The fastened structure management system described in the immediately preceding paragraph, wherein, in conjunction with running the design analysis application program, the computing system is configured to: determine distributed load conditions for the fastened structure based on the load conditions detected by the plurality of sensor element models; and compare the distributed load conditions to predetermined distributed thresholds for the distributed load conditions.

The fastened structure management system described in the immediately preceding paragraph, wherein the distributed load conditions comprise at least one of a distributed displacement condition, a distributed rotation condition, a distributed stiffness condition, a distributed clamp-up condition, a distributed deformation condition and a distributed damage state condition.

The fastened structure management system described in the first one of the two immediately preceding paragraphs, wherein, in conjunction with running the design analysis application program, the computing system is configured to validate the electronic design model of the fastened structure where the distributed load conditions are within a predetermined tolerance of the predetermined distributed thresholds.

An analytical computing system for analysis of a fastened structure, comprising: at least one processor and associated memory; at least one electronic storage device storing a design analysis application program; and a network interface in operative communication with the at least one processor and configured to interface with a communication network; wherein the analytical computing system, in conjunction with the at least one processor running the design analysis application program, is configured to: access an electronic design model of a fastened structure from a design computing system via the network interface and the communication network, the fastened structure comprising at least two structural elements assembled via a plurality of fastener elements, the electronic design model comprising structural element parameters for each structural element and fastener parameters for each fastener element, the structural element parameters and the fastener parameters are representative of characteristics and behaviors of the corresponding structural elements and the corresponding fastener elements in environments to which a built-up version of the fastened structure is expected to be exposed; embed at least one sensor element model within the electronic design model, each sensor element model is embedded at a select location relating to a select joint between two or more structural elements of the at least two structural elements, the at least one sensor element model configured to monitor measurement parameters at the select location in response to one or more simulated load applied to the electronic design model; apply at least one simulated load to the electronic design model; monitor the measurement parameters using the at least one sensor element model to detect load conditions at the corresponding select location based on the at least one simulated load; and compare the detected load conditions to predetermined measurement thresholds for the monitored measurement parameters.

The analytical computing system described in the immediately preceding paragraph, wherein the at least one electronic storage device is configured to store the at least one sensor element model, the measurement parameters associated with the at least one sensor element model and the predetermined measurement thresholds associated with the measurement parameters.

The analytical computing system described in the first one of the two immediately preceding paragraphs, wherein the fastened structure comprises three or more structural elements assembled via the plurality of fastener elements.

The analytical computing system described in the first one of the three immediately preceding paragraphs, wherein the fastened structure forms at least one of a product structure, a vehicle structure, an automotive vehicle structure, an air vehicle structure, an aircraft structure, a missile structure, a rocket structure, a launch structure, a satellite structure, a bridge structure and a tunnel structure.

The analytical computing system described in the first one of the four immediately preceding paragraphs, wherein the plurality of fastener elements comprises a set of fastener elements, wherein the at least two structural elements comprise at least one composite structural element and at least one non-composite structural element, wherein the at least one non-composite structural element is joined to one or more of the at least one composite structural element via the set of fastener elements.

The analytical computing system described in the immediately preceding paragraph, wherein the plurality of fastener elements and the set of fastener elements comprise at least one of metal fasteners, metal screws, metal machine screws, metal bolts, metal pins, metal rivets, metal nuts and metal retaining mechanisms.

The analytical computing system described in the first one of the two immediately preceding paragraphs, wherein the at least one composite structural element comprises at least one of a thermoplastic composite, a thermoset composite, a reinforced composite, a fiber reinforced composite, a carbon fiber reinforced composite, a reinforced polymer, a fiber reinforced polymer and a carbon fiber reinforced polymer.

The analytical computing system described in the first one of the three immediately preceding paragraphs, wherein the at least one non-composite structural element comprises at least one of titanium, a titanium-based metal, a titanium alloy, Ti-6A1-4V, Ti 6-4, aluminum, an aluminum-based metal, an aluminum alloy, vanadium, a vanadium-based metal and a vanadium alloy.

The analytical computing system described in the first one of the eight immediately preceding paragraphs, wherein the plurality of fastener elements are represented in the electronic design model as a plurality of fastener element models.

The analytical computing system described in the immediately preceding paragraph, wherein each fastener element model is represented in the electronic design model as a truss element, a beam element or a shell element.

The analytical computing system described in the first one of the ten immediately preceding paragraphs, wherein the at least two structural elements are represented in the electronic design model as at least two structural element models.

The analytical computing system described in the immediately preceding paragraph, wherein each structural element model is represented in the electronic design model as a beam element, a shell element or a solid element.

The analytical computing system described in the first one of the twelve immediately preceding paragraphs, wherein each sensor element model is represented in the electronic design model as a truss element, a beam element or a shell element.

The analytical computing system described in the first one of the thirteen immediately preceding paragraphs, wherein the select location comprises at least one of a select surface location of the at least two structural elements, a select interior location of the at least two structural elements, a select gap location between the at least two structural elements and a select overlap location for two or more structural elements of the at least two structural elements.

The analytical computing system described in the first one of the fourteen immediately preceding paragraphs, wherein the at least one simulated load comprises at least one of a simulated thermal load, a simulated hygric load, a simulated mechanical load, a simulated structural load and a simulated axial load.

The analytical computing system described in the first one of the fifteen immediately preceding paragraphs, wherein the detected load conditions comprise at least one of a displacement condition, a rotation condition, a stiffness condition, a clamp-up condition, a deformation condition and a damage state condition.

The analytical computing system described in the first one of the sixteen immediately preceding paragraphs, wherein the at least one sensor element model comprises a zero-stiffness model that has no effect on the detected load conditions.

The analytical computing system described in the first one of the seventeen immediately preceding paragraphs, wherein the at least one sensor element model comprises at least one of a one-dimensional element model and a two-dimensional element model.

The analytical computing system described in the first one of the eighteen immediately preceding paragraphs, wherein the at least one sensor element model is representative of at least one of a strain measurement device, an extensometer, a strain gauge, a strain transducer, a load sensor, a load cell, a force sensor, a piezoresistive force sensor, a torque sensor, a torque transducer, a torque cell, a stiffness sensor and a tactile sensor.

The analytical computing system described in the first one of the nineteen immediately preceding paragraphs, wherein the at least one sensor element model comprises at least one fastener element model associated with at least one fastener element model of the plurality of fastener elements.

The analytical computing system described in the immediately preceding paragraph, wherein the fastener element model comprises a one-dimensional element model.

The analytical computing system described in the first one of the two immediately preceding paragraphs, wherein the fastener element model comprises a calibrated model with fastener parameters representative of characteristics and behaviors of an actual fastener in environments to which the built-up version of the fastened structure is expected to be exposed such that the fastener element model responds to the at least one simulated load in a manner that effects the detected load conditions.

The analytical computing system described in the first one of the three immediately preceding paragraphs, wherein the fastener element model comprises a zero-stiffness model that has no effect on the detected load conditions.

The analytical computing system described in the first one of the twenty-three immediately preceding paragraphs, wherein the analytical computing system, in conjunction with the at least one processor running the design analysis application program, is configured to validate the electronic design model of the fastened structure where the detected load conditions are within a predetermined tolerance of the predetermined measurement thresholds.

The analytical computing system described in the first one of the twenty-four immediately preceding paragraphs, wherein the at least one sensor element model comprises a plurality of sensor element models.

The analytical computing system described in the immediately preceding paragraph, wherein the analytical computing system, in conjunction with the at least one processor running the design analysis application program, is configured to: determine distributed load conditions for the fastened structure based on the load conditions detected by the plurality of sensor element models; and compare the distributed load conditions to predetermined distributed thresholds for the distributed load conditions.

The analytical computing system described in the immediately preceding paragraph, wherein the distributed load conditions comprise at least one of a distributed displacement condition, a distributed rotation condition, a distributed stiffness condition, a distributed clamp-up condition, a distributed deformation condition and a distributed damage state condition.

The analytical computing system described in the first one of the two immediately preceding paragraphs, wherein the analytical computing system, in conjunction with the at least one processor running the design analysis application program, is configured to validate the electronic design model of the fastened structure where the distributed load conditions are within a predetermined tolerance of the predetermined distributed thresholds.

## Claims

1. A method (100) for analysis of a fastened structure (500), comprising:
accessing (102) an electronic design model (400) of the fastened structure (500), the fastened structure (500) comprising at least two structural elements (502) assembled via a plurality of fastener elements (504), the electronic design model (400) comprising structural element parameters (610) for each structural element (502) and fastener parameters (612) for each fastener element (504), the structural element parameters (610) and the fastener parameters (612) are representative of characteristics and behaviors of the corresponding structural elements (502) and the corresponding fastener elements (504) in environments to which a built-up version of the fastened structure (500) is expected to be exposed;
embedding (104) at least one sensor element model (402) within the electronic design model (400), each sensor element model (402) is embedded at a select location relating to a select joint between two or more structural elements (502) of the at least two structural elements (502), the at least one sensor element model (402) configured to monitor measurement parameters (614) at the select location in response to one or more simulated load (616) applied to the electronic design model (400);
applying (106) at least one simulated load (616) to the electronic design model (400);
monitoring (108) the measurement parameters (614) using the at least one sensor element model (402) to detect load conditions (618) at the corresponding select location based on the at least one simulated load (616); and
comparing (110) the detected load conditions (618) to predetermined measurement thresholds (620) for the monitored measurement parameters (614).

2. The method of Claim 1 wherein the fastened structure (500) comprises three or more structural elements (502) assembled via the plurality of fastener elements (504).

3. The method of Claim 1 wherein the fastened structure (500) forms at least one of a product structure, a vehicle structure, an automotive vehicle structure, an air vehicle structure, an aircraft structure, a missile structure, a rocket structure, a launch structure, a satellite structure, a bridge structure and a tunnel structure.

4. The method of Claim 1 wherein the plurality of fastener elements (504) comprises a set of fastener elements (504), wherein the at least two structural elements (502) comprise at least one composite structural element and at least one non-composite structural element, wherein the at least one non-composite structural element is joined to one or more of the at least one composite structural element via the set of fastener elements (504).

5. The method of Claim 1 wherein the at least two structural elements (502) are represented in the electronic design model (400) as at least two structural element models (406).

6. The method of Claim 1 wherein each sensor element model (402) is represented in the electronic design model (400) as a truss element, a beam element or a shell element.

7. The method of Claim 1 wherein the select location comprises at least one of a select surface location of the at least two structural elements (502), a select interior location of the at least two structural elements (502), a select gap location between the at least two structural elements (502) and a select overlap location for two or more structural elements (502) of the at least two structural elements (502).

8. The method of Claim 1 wherein the at least one simulated load (616) comprises at least one of a simulated thermal load, a simulated hygric load, a simulated mechanical load, a simulated structural load and a simulated axial load.

9. The method of Claim 1 wherein the detected load conditions (618) comprise at least one of a displacement condition, a rotation condition, a stiffness condition, a clamp-up condition, a deformation condition and a damage state condition.

10. The method of Claim 1 wherein the at least one sensor element model (402) comprises a zero-stiffness model that has no effect on the detected load conditions (618).

11. The method of Claim 1 wherein the at least one sensor element model (402) comprises at least one of a one-dimensional element model and a two-dimensional element model.

12. The method of Claim 1 wherein the at least one sensor element model (402) is representative of at least one of a strain measurement device, an extensometer, a strain gauge, a strain transducer, a load sensor, a load cell, a force sensor, a piezoresistive force sensor, a torque sensor, a torque transducer, a torque cell, a stiffness sensor and a tactile sensor.

13. The method of Claim 1 wherein the at least one sensor element model (402) comprises at least one fastener element model (404) associated with at least one fastener element model (404) of the plurality of fastener elements (504).

14. A fastened structure management system (600), comprising:
a computing system (602) configured to run a design analysis application program (604); and
a storage device (606) in operative communication with the computing system (602);
wherein, in conjunction with running the design analysis application program (604), the computing system (602) is configured to implement a method according to any of claims 1 to 13.

15. An analytical computing system (700) for analysis of a fastened structure (500), comprising:
at least one processor (702) and associated memory (704);
at least one electronic storage device (706) storing a design analysis application program (604); and
a network interface (708) in operative communication with the at least one processor (702) and configured to interface with a communication network (710); wherein the analytical computing system (700), in conjunction with the at least one processor (702) running the design analysis application program (604), is configured to implement a method according to any of claims 1 to 13.
